# FASCICULE DE BREVET EUROPEEN

(11) **EP 1 576 069 B1**
(45) Date de publication et mention de la délivrance du brevet: **21.06.2006**
(21) Numéro de dépôt: 03799621.2
(22) Date de dépôt: 18.12.2003
(51) Int. Cl.: C09K 3/14, C04B 35/111, B24D 3/14, C04B 35/117, C04B 35/107, C04B 35/109, C04B 35/581, C04B 35/653, C01B 21/082

(54) **GRAINS ABRASIFS A BASE D'OXYNITRURE D'ALUMINIUM ET DE ZIRCONIUM**
SCHLEIFKÖRNER AUF DER BASIS VON ALUMINIUM- UND ZIRKONIUMOXYNITRID
ALUMINIUM AND ZIRCONIUM OXYNITRIDE ABRASIVE GRAINS

(30) Priorité: 23.12.2002 FR 0216498
(43) Date de publication de la demande: 21.09.2005
(73) Titulaire: Alcan Abrasifs Réfractaires Céramiques, 13120 Gardanne (FR)
(72) Inventeur: BOURLIER, Florent, F-92130 Issy Les Moulineaux (FR); PEILLON, Florence, F-74190 Chedde (FR)
(74) Mandataire: Fénot, Dominique
(86) Numéro de dépôt international: PCT/FR2003/003787
(87) Numéro de publication internationale: WO 2004/063306

(56) Documents cités:
- EP-A- 0 509 940
- WO-A-02/08145
- US-A- 3 891 408

## Description

### Domaine technique de l'invention

L'invention concerne le domaine des grains abrasifs, en particulier les grains agglomérés destinés aux meules de rectification, les grains appliqués sur des supports de type toiles et papiers, ainsi que les grains utilisés en projection ou en pâte de polissage.

### Etat de la technique

Les abrasifs électrofondus à base d'alumine-zircone sont connus depuis plus de quarante ans et ont été décrits notamment dans plusieurs brevets de la société Norton. Le brevet US 3181939, déposé en 1962, décrit des abrasifs électrofondus de type alumine-zircone avec des teneurs en ZrO₂ comprises entre 10 et 60%, et une microstructure comprenant un eutectique alumine-zircone et des cristaux de zircone et d'alumine α. Le brevet US 3891408, déposé en 1971, concerne des abrasifs électrofondus de type alumine-zircone avec une teneur en ZrO₂ comprise entre 35 et 50%. Le brevet US 3993119 publié en 1976 décrit une machine de coulée d'oxydes abrasifs fondus permettant de tremper énergiquement la masse fondue. Le brevet US 4457767 de 1984 protégé des abrasifs électrofondus de type alumine-zircone avec une teneur en oxyde d'yttrium Y₂O₃ comprise entre 0,1 et 2%.
Plus récemment, la société 3M Innovative Properties a déposé les demandes de brevet :
- WO 02/08143, qui revendique un grain abrasif électrofondu caractérisé par une fraction volumétrique d'au moins 20%, constituée d'un mélange eutectique formé entre d'une part ZrO₂ et d'autre part au moins deux constituants, dont Al₂O₃ et/ou des composés définis de type Al₂O₃,Y₂O₃.
WO 02/08146, qui revendique un grain abrasif électrofondu de composition eutectique dans laquelle l'eutectique est formé entre d'une part ZrO₂ et d'autre part au moins deux constituants dont Al₂O₃ et/ou des composés définis de type Al₂O₃-oxydes de terres rares.

Le point commun entre ces demandes de brevets est que les grains abrasifs contiennent toujours, d'une façon ou d'une autre, soit de l'oxyde d'yttrium, soit au moins un oxyde des terres rares.
Le Traité de Chimie Minérale de Paul Pascal, Masson, 1962, enseignait déjà que ZrO₂ possède trois variétés allotropiques. La forme monoclinique stable à basse température se transforme vers 1100°C en zircone quadratique, puis en zircone cubique. La forme cubique est métastable à la température ambiante et elle peut s'obtenir par trempe ; certains éléments, sans autre précision, stabilisent la forme cubique.
Les brevets cités plus haut indiquent toujours comme moyen de préparation du produit la coulée du produit fondu, suivie d'une trempe énergique, méthode qui tend à stabiliser la forme cubique métastable ; l'expérience montre toutefois que l'efficacité de cette trempe reste assez limitée, d'où l'intérêt du brevet US 4457767 qui enseigne que l'oxyde d'yttrium stabilise la phase cubique de ZrO₂ La demande WO 02/08146 laisse penser que d'autres éléments stabilisants existent dans le groupe des métaux des terres rares.
Par ailleurs le brevet EP 0509940 de la demanderesse décrit une large gamme de produits électrofondus pour des applications d'abrasifs ou de réfractaires, constitués d'un ou de plusieurs oxynitrures d'éléments métalliques dans la liste desquels se trouvent l'aluminium et le zirconium ; mais aucun exemple ne cite le cas d'oxynitrures d'aluminium et de zirconium ni d'oxynitrure double d'aluminium et de zirconium.

### But de l'invention

L'invention a pour but de fournir des grains abrasifs destinés à être appliqués sur des supports de toiles ou papiers, ou agglomérés dans des meules, ou en projection ou en pâte de polissage, et présentant, par rapport aux abrasifs corindon-zircone de l'art antérieur à teneur équivalente en zircone, une ténacité améliorée et des performances en usinage plus élevées.

### Objet de l'invention

L'invention a pour objet des grains abrasifs à base de corindon-zircone contenant en poids plus de 50% de mélange eutectique alumine-zircone, caractérisés en ce qu'ils contiennent de 0,3 à 3%, et de préférence de 0,3 à 1% d'azote, et que les cristaux de zircone sont à plus de 75% sous forme cubique.
La teneur en aluminium métallique est inférieure à 0,1%, et de préférence à 0,01%, et celle en nitrure d'aluminium inférieure à 0,1%, et de préférence à 0,01%.
L'invention a également pour objet un procédé de fabrication de grains abrasifs de ce type par fusion au four électrique à arc d'une charge constituée d'alumine et de baddeleyite, en ajoutant à cette charge un matériau nitruré constitué de nitrure d'aluminium et/ou d'un ou plusieurs oxynitrures d'aluminium.
Elle a également pour objet un procédé de préparation de grains abrasifs comportant la préparation d'un mélange de poudres de nitrure d'aluminium et/ou d'oxynitrure AlₓO_{y}N_{z}, d'alumine et de zircone, le frittage réactif de ce mélange à une température comprise entre 1500°C et 1600°C, et le refroidissement rapide des grains frittés entre 1100°C et la température ambiante.

### Description de l'invention

A l'intérieur du domaine très large des compositions d'abrasifs décrites dans le brevet EP 0509940, la demanderesse a mis en évidence que les produits à base d'oxynitrures d'aluminium et de zirconium présentent des performances supérieures à la fois à celles des produits de l'art antérieur de type corindon-zircone et de type oxynitrure d'aluminium, tel que l'AlON.
Les produits selon l'invention contiennent des oxydes, des nitrures et des oxynitrures d'aluminium et de zirconium, et il n'est pas toujours aisé de mesurer la teneur respective de chacun de ces composés. Par contre, on mesure aisément les teneurs élémentaires en aluminium, zirconium et azote. Pour cette raison, on a recours à la notion de « teneur équivalente » en considérant arbitrairement le produit comme un mélange d'Al₂O₃, de ZrO₂ et d'AlN. La teneur équivalente en AlN est celle pour laquelle tout l'azote serait sous forme d'AlN, la teneur équivalente en ZrO₂ est celle pour laquelle tout le zirconium serait sous forme de ZrO₂, et la teneur équivalente en Al₂O₃ est celle pour laquelle l'aluminium serait sous forme d'Al₂O₃, sauf l'aluminium correspondant à la teneur équivalente en AIN. Un autre intérêt de cette notion de teneur équivalente est de comparer le produit aux abrasifs corindon-zircone de l'art antérieur.

Les produits selon l'invention sont du type corindon-zircone avec une teneur équivalente en ZrO₂ entre 21 et 44%, une teneur équivalente en Al₂O₃ entre 57 et 80% et une teneur en azote comprise entre 0,3 et 3%, et de préférence entre 0,3 et 1%. Leur structure est, pour plus de 50% en poids, un mélange eutectique de cristaux d'alumine α et de zircone. Les cristaux de zircone sont à plus de 75% de forme cubique, le reste étant de forme monoclinique. L'azote est essentiellement présent sous forme de nitrure de zirconium, le reste étant, à plus de 90%, sous forme d'oxynitrure d'aluminium.
Expérimentalement, on constate que la présence de nitrure de zirconium dans le produit s'accompagne d'une augmentation importante de la part relative de la forme cubique dans la zircone contenue. Le nitrure de zirconium est un produit parfaitement stable au contact de l'eau et des acides, ce qui n'est pas du tout le cas du nitrure d'aluminium, ce qui en fait un agent stabilisateur excellent.
Ces produits peuvent être obtenus par fusion au four électrique à arc d'une charge constituée d'alumine, de zircone, par exemple sous forme de baddeleyite, et d'un composé nitruré à base de nitrure et/ou d'oxynitrure d'aluminium. Le nitrure et/ou les oxynitrures d'aluminium réagissent avec la zircone au cours de la fusion pour former du nitrure de zirconium.
La masse fondue est coulée et solidifiée rapidement par tout moyen connu de l'homme de métier pour provoquer une trempe efficace ; lors de ses essais, la demanderesse à mis en oeuvre la technique décrite dans le brevet US 3993119, mais avec du matériel de coulée fixe compte tenu de la taille des essais. La coulée se fait sur un support froid, dont la masse est au moins égale à deux fois celle de la masse fondue, et à une température avant coulée se situant entre 50°C et 350°C
Si on utilise comme composé nitruré un produit préparé par nitruration directe selon le brevet EP 0494129 de la demanderesse, et contenant nitrure et oxynitrure d'aluminium, on obtient un produit dans lequel la teneur en nitrure d'aluminium libre est faible, typiquement inférieure à 0,1%. De plus, par attaque légèrement acide, avec un lavage final des grains par une solution de pH compris entre 2 et 7, on peut, sans nuire à la tenue mécanique du matériau, descendre cette teneur à moins de 0,01%. Il en est de même pour l'aluminium métallique.
On peut également préparer des grains abrasifs selon l'invention par frittage réactif à partir d'un mélange de poudres d'alumine, de zircone de nitrure et/ou d'oxynitrure d'aluminium.

Le frittage s'effectue à une température comprise entre 1500 et 1600°C, suivi d'un refroidissement rapide des grains à partir de 1100°C.
On obtient avec les grains abrasifs selon l'invention des propriétés mécaniques exceptionnelles, notamment une dureté Knoop égale ou supérieure à 19 GPA, voire à 20 Gpa, et comprise entre 19 et 21 GPa, une ténacité d'au moins 2,3 MPa.m^{1/2}, très souvent supérieure à 2,7 MPa.m^{1/2}, et des performances en test d'usinage de 70% plus élevées que celles d'un abrasif corindon-zircone classique à même teneur en zircone.

### Exemples

### Méthodes d'analvses et de contrôle

La teneur en azote a été mesurée sur échantillons de 5 mg pesés à 0,1 mg près, par combustion dans un analyseur de gaz LECO TC 436, et analyse par conductivité thermique du gaz obtenu. Sur chaque échantillon, le résultat indiqué est la moyenne de cinq mesures.

### Exemple 1

On a mélangé 2500 kg d'alumine Bayer en poudre de granulométrie inférieure à 100 µm avec 1000 kg d'aluminium en poudre de granulométrie inférieure à 1,2 mm. Ce mélange a été placé dans un four étanche, dégazé sous vide, puis chauffé sous une pression d'azote de 1 atm.
La nitruration a démarré vers 700°C, et l'on a maintenu la pression d'azote pour favoriser la montée en température de la charge. La réaction exothermique a permis d'atteindre environ 1750°C en fin d'opération.
Après refroidissement, on a récupéré au terme de l'opération une masse d'oxynitrure d'aluminium de 4010 kg, poreuse, homogène, mécaniquement peu solide.
L'opération a été refaite trois fois pour finalement disposer d'un lot de 16100 kg de produit qui a été broyé à une granulométrie inférieure à 10 mm, puis échantillonné et analysé ; le résultat de l'analyse a donné une teneur en AIN équivalent de 35,6%.

### Exemple 2

On a préparé 400 kg d'un mélange constitué de 30 kg du produit obtenu à l'exemple N°1, 100 kg de baddeleyite à 95% de ZrO₂, et 270 kg d'alumine Bayer.
Cette charge a été fondue dans un four à arc de fusion de 100 kW ; la masse fondue a été coulée sur une lingotière constituée de douze plaques verticales en fonte (0,8 m x 0,8 m x 0,05 m) séparées de 0,025 m. La masse coulée a été de 390 kg ; l'analyse de ce produit a donné :

| | |
|---|---|
| Teneur en AlN équivalent : | 2,3% |
| Teneur en Zr exprimé en ZrO₂ : | 23,6% |
| Teneur en Al exprimé en Al₂O₃ : | 73,7% |

L'examen de la structure du produit a montré l'existence de deux phases majoritaires : l'alumine α et la zircone cubique, et deux phases minoritaires: le nitrure de zirconium et la zircone monoclinique. L'analyse chimique a donné par ailleurs une teneur en AlN libre dans le produit de 0,07%.
Les résultats de mesure de la dureté et de la ténacité ont été portés dans le tableau 1 où figurent également les résultats relatifs aux produits voisins :

**Tableau 1**

| | Dureté Knoop | Dureté Vickers | Ténacité |
|---|---|---|---|
| Produit de l'exemple 2 | 19,9 GPa | 18,9 GPa | 2,8 MPa.m^{1/2} |
| Corindon-Zircone à 25% de ZrO² selon l'art antérieur | 18,7 GPa | 17,9 Gpa | 2,1 MPa.m^{1/2} |
| Corindon blanc | 20,3 GPa | 20 GPa | 2,0 MPa.m^{1/2} |

On constate que les grains selon l'invention présentent, par rapport aux grains en corindon-zircone de même teneur en zircone, une dureté un peu plus élevée et une ténacité très supérieure.

### Exemple 3

Un lot de grains abrasifs F80 (selon la norme FEPA) a été préparé à partir du produit préparé à l'exemple 2 et testé en meulage suivant la procédure suivante :
Une mono-couche de grains est fixée sur la partie latérale d'un tambour métallique de diamètre 160 mm au moyen d'une résine acrylique thermodurcissable. Le test de meulage consiste à attaquer un barreau d'acier inoxydable 18-8 de section 12 mm x 12 mm poussé perpendiculairement avec une force de 85 Newton, contre la face latérale du tambour entraîné à 6000 tours/minute. La durée de l'opération est de trois fois une minute.
La masse du barreau d'acier inoxydable est contrôlée après une minute, deux minutes et trois minutes pour évaluer la perte de masse. Les enlèvements d'acier obtenus en grammes par minute ont été portés dans le tableau 2 où figurent également les résultats de ce test obtenus avec d'autres produits en grains F80 :

**Tableau 2**

| Produit | Fournisseur | Masse enlevée minute par minute | | |
|---|---|---|---|---|
| | | 1 | 2 | 3 |
| Corindon Zircone à 25% de ZrO² | La demanderesse | 11,0 11,0 | 7,5 7,5 | 6,8 6,8 |
| Corindon Zircone à 25% de ZrO² | Produit concurrent | 10,8 | 7,9 | 7,7 |
| Produit de l'exemple 2 | La demanderesse | 19,6 | 16,5 | 14,9 |

On constate que les grains selon l'invention présentent des performances abrasives nettement supérieures à celles des grains de corindon-zircone à même teneur en zircone.

## Revendications

1. Grains abrasifs de type alumine-zircone contenant en poids plus de 50% de mélange eutectique alumine-zircone, **caractérisés en ce qu'**ils contiennent de 0,3 à 3% d'azote et que les cristaux de zircone sont à plus de 75% sous forme cubique.

2. Grains abrasifs selon la revendication 1, **caractérisés en ce que** l'azote est majoritairement sous forme de nitrure de zirconium.

3. Grains abrasifs selon l'une des revendications 1 ou 2, **caractérisés en ce que** la teneur en aluminium métal est inférieure à 0,1% en poids, et que la teneur en nitrure d'aluminium libre AlN est inférieure à 0,1%.

4. Grains abrasifs selon la revendication 3, **caractérisés en ce que** la teneur en aluminium métal est inférieure à 0,01%, et la teneur en nitrure d'aluminium libre AlN est inférieure à 0,01%.

5. Grains abrasifs selon l'une des revendications 1 à 4, **caractérisés en ce que** l'azote non combiné sous forme de nitrure de zirconium l'est à plus de 90% sous forme d'oxynitrure d'aluminium.

6. Grains abrasifs selon l'une des revendications 1 à 5, **caractérisés en ce que** la teneur en azote se situe entre 0,3 et 1%.

7. Grains abrasifs selon l'une des revendications 1 à 6, **caractérisés en ce que** les teneurs totales en zirconium et en aluminium sous forme d'oxydes, de nitrures ou d'oxynitrures, exprimées sous forme de teneurs équivalentes en oxydes, se situent pour ZrO₂ entre 21 et 44%, et pour Al₂O₃ entre 57 et 80%.

8. Grains abrasifs selon l'une des revendications 1 à 7, **caractérisés en ce qu'**ils présentent une dureté Knoop égale ou supérieure à 19 GPa, et une ténacité égale ou supérieure à 2,3 MPa.m^{½}.

9. Grains abrasifs selon l'une des revendications 1 à 8, **caractérisés en ce qu'**ils présentent une dureté Knoop égale ou supérieure à 20 GPa, et une ténacité égale ou supérieure à 2,7 MPa.m^{1/2}.

10. Procédé de fabrication de grains abrasifs selon l'une des revendications 1 à 9, par fusion au four électrique à arc d'une charge constituée d'alumine et de baddeleyite, **caractérisé en ce que** l'on ajoute à cette charge un matériau nitruré constitué de nitrure d'aluminium et/ou d'un ou plusieurs oxynitrures d'aluminium.

11. Procédé selon la revendication 10, **caractérisé en ce que** le matériau nitruré est préparé par nitruration d'une charge constituée d'un mélange d'alumine et d'aluminium en poudre.

12. Procédé selon l'une des revendications 10 ou 11, **caractérisé en ce que** le nitrure et/ou les oxynitrures d'aluminium réagissent avec la zircone au cours de la fusion pour former du nitrure de zirconium.

13. Procédé selon l'une des revendications 10 à 12 **caractérisé en ce que** la masse fondue au four électrique est coulée et solidifiée rapidement.

14. Procédé selon la revendication 13, dans lequel la solidification rapide de la masse fondue est obtenue en la coulant sur un support froid, **caractérisé par le fait que** la masse du support froid est au moins égale à deux fois celle de la masse fondue, et que sa température avant coulée se situe entre 50°C et 350°C.

15. Procédé de préparation de grains abrasifs selon l'une des revendications 1 à 9, comportant la préparation d'un mélange de poudres de nitrure d'aluminium AIN et/ou d'oxynitrure AlₓO_{y}N_{z}, d'alumine et de zircone, le frittage réactif de ce mélange à une température comprise entre 1500°C et 1600°C, et le refroidissement rapide des grains frittés entre 1100°C et la température ambiante.

16. Procédé selon l'une des revendications 10 à 15, **caractérisé en ce qu'**il comporte un lavage final des grains avec une solution de pH compris entre 2 et 7.

17. Utilisation de grains abrasifs selon l'une des revendications 1 à 9 pour la fabrication de meules abrasives destinées à la rectification des métaux et alliages métalliques ou le meulage de précision.

18. Utilisation de grains abrasifs selon l'une des revendications 1 à 9 pour la fabrication de toiles et papiers abrasifs destinés au polissage.

19. Utilisation de grains abrasifs selon l'une des revendications 1 à 9 pour le polissage par projection ou la fabrication de pâte à polir.

## Claims

1. Abrasive grains containing more than 50% of a eutectic alumina - zirconia mixture by weight, **characterised in that** they contain from 0.3% to 3% of nitrogen, and **in that** more than 75% of the zirconia crystals are in cubic form

2. Abrasive grains according to claim 1, **characterised in that** most of the nitrogen is in zirconium nitride form.

3. Abrasive grains according to either claim 1 or 2, **characterised in that** the content of metallic aluminium is less than 0.1% by weight and the content of free aluminium nitride AlN is less than 0.1%.

4. Abrasive grains according to claim 3, **characterised in that** the content of metallic aluminium is less than 0.01% and the content of free aluminium nitride AlN is less than 0.01%.

5. Abrasive grains according to any one of claims 1 to 4, **characterised in that** more than 90% of the nitrogen not combined in the form of zirconium nitride is combined in the form of aluminium oxynitride.

6. Abrasive grains according to any one of claims 1 to 5, **characterised in that** the content of nitrogen is between 0.3 and 1%.

7. Abrasive grains according to any one of claims 1 to 6, **characterised in that** the total contents of zirconium and aluminium in the form of oxides, nitrides and oxynitrides expressed in the form of equivalent contents, of oxides, are between 21 and 44% for ZrO₂ and between 57 and 80% for Al₂O₃.

8. Abrasive grains according to any one of claims 1 to 7, **characterised in that** they have a Knoop hardness equal to or greater than 19 GPa and a tenacity equal to or greater than 2.3 MPa^{1/2}.

9. Abrasive grains according to any one of claims 1 to 8, **characterised in that** they have a Knoop hardness equal to or greater than 20 GPa and a tenacity equal to or greater than 2.7 MPa.m^{1/2}.

10. Process of manufacturing abrasive grains according to any one of claims 1 to 9, by melting in an electric arc furnace with a load composed of alumina and baddeleyite, **characterised in that** a nitride material is added to this load composed of aluminium nitride and / or one or several aluminium oxynitrides.

11. Process according to claim 10, **characterised in that** the nitride material is prepared by nitriding of a load composed of an alumina and aluminium powder mixture.

12. Process according to any one of claims 10 or 11, **characterised in that** the nitride and / or the aluminium oxynitrides react with zirconium during melting to form zirconium nitride.

13. Process according to any one of claims 10 to 12, **characterised in that** the mass melted in the electric furnace is cast and solidified quickly.

14. Process according to claim 13, in which the fast solidification of the molten mass is obtained by pouring it on a cold support, **characterised by** the fact that the mass of the cold support is equal to at least twice the mass of the molten mass, and in that its temperature before casting is between 50°C and 350°C.

15. Process for preparation of abrasive grains according to any one of claims 1 to 9, including the preparation of a mixture of aluminium nitride AlN and / or oxynitride AlₓO_{y}N_{z}, alumina and zirconia powders, the reactive sintering of this mixture at a temperature between 1500°C and 1600°C, and fast cooling of the sintered grains between 1100°C and ambient temperature.

16. Process according to any one of claims 10 to 15, **characterised in that** the process comprises a final washing of the grains with a solution with a pH between 2 and 7.

17. Use of abrasive grains according to any one of claims 1 to 9 for manufacture of abrasive grinders designed for die grinding of metals and metallic alloys or precision grinding.

18. Use of abrasive grains according to any one of claims 1 to 9 for the manufacture of abrasive fabrics and papers designed for polishing.

19. Use of abrasive grains according to any one of claims 1 to 9, for sprayed polishing or manufacture of polishing compound.

## Patentansprüche

1. Schleifkörner vom Typ Aluminium-/Zirkonoxid mit mehr als 50 Gew.-% eines eutektischen Aluminium-/Zirkonoxidgemisches, **dadurch gekennzeichnet, dass** sie 0,3 bis 3 % Stickstoff enthalten und die Zirkonoxidkristalle zu mehr als 75 % in kubischer Form vorliegen.

2. Schleifkörner nach Anspruch 1, **dadurch gekennzeichnet, dass** der Stickstoff mehrheitlich in Form von Zirkoniumnitrid vorliegt.

3. Schleifkörner nach einem der Ansprüche 1 oder 2, **dadurch gekennzeichnet, dass** der Gehalt an Aluminiummetall kleiner als 0,1 Gew.-% und der Gehalt an freiem Aluminiumnitrid AIN kleiner als 0,1 % ist.

4. Schleifkörner nach Anspruch 3, **dadurch gekennzeichnet, dass** der Gehalt an Aluminiummetall kleiner als 0,01 % und der Gehalt an freiem Aluminiumnitrid AIN kleiner als 0,01 % ist.

5. Schleifkörner nach einem der Ansprüche 1 bis 4, **dadurch gekennzeichnet, dass** der Stickstoff, der in Form von Zirkoniumnitrid nicht gebunden ist, zu mehr als 90% in Form von Aluminiumoxynitrid gebunden ist.

6. Schleifkörner nach einem der Ansprüche 1 bis 5, **dadurch gekennzeichnet, dass** der Gehalt an Stickstoff zwischen 0,3 und 1 % liegt.

7. Schleifkörner nach einem der Ansprüche 1 bis 6, **dadurch gekennzeichnet, dass** die Gesamtgehalte an Zirkonium und Aluminium in Form von Oxiden, Nitriden oder Oxynitriden, ausgedrückt in Form von Äquivalentgehalten an Oxiden, für ZrO₂ zwischen 21 und 44 % und für Al₂O₃ zwischen 57 und 80 % liegen.

8. Schleifkörner nach einem der Ansprüche 1 bis 7, **dadurch gekennzeichnet, dass** sie eine Knoop-Härte gleich oder größer 19 GPa und eine Zähigkeit gleich oder größer 2,3 MPa.m^{½} aufweisen.

9. Schleifkörner nach einem der Ansprüche 1 bis 8, **dadurch gekennzeichnet, dass** sie eine Knoop-Härte gleich oder größer 20 GPa und eine Zähigkeit gleich oder größer 2,7 MPa.m^{1/2} aufweisen.

10. Verfahren zur Herstellung von Schleifkörnern nach einem der Ansprüche 1 bis 9 durch Schmelzen einer Charge bestehend aus Aluminiumoxid und Baddeleyit im elektrischen Lichtbogenofen, **dadurch gekennzeichnet, dass** dieser Charge ein nitrierter Werkstoff bestehend aus Aluminiumnitrid und/oder einem oder mehreren Aluminiumoxynitriden zugesetzt wird.

11. Verfahren nach Anspruch 10, **dadurch gekennzeichnet, dass** der nitrierte Werkstoff durch Nitrierung einer Charge bestehend aus einem Gemisch aus Aluminiumoxid und gepulvertem Aluminium hergestellt wird.

12. Verfahren nach einem der Ansprüche 10 oder 11, **dadurch gekennzeichnet, dass** das Aluminiumnitrid und/oder die Aluminiumoxynitride mit dem Zirkon während des Schmelzvorgangs reagieren, um ein Zirkoniumnitrid zu bilden.

13. Verfahren nach einem der Ansprüche 10 bis 12, **dadurch gekennzeichnet, dass** die im Elektroofen erschmolzene Masse abgegossen und schnell zur Erstarrung gebracht wird.

14. Verfahren nach Anspruch 13, bei dem die schnelle Erstarrung der Schmelze durch Abguss auf einen kalten Träger erzielt wird, **dadurch gekennzeichnet, dass** die Masse des kalten Trägers mindestens zweimal so groß wie die der Schmelze ist und seine Temperatur vor Abguss zwischen 50°C und 350°C liegt.

15. Verfahren zur Herstellung von Schleifkörnern nach einem der Ansprüche 1 bis 9, umfassend das Herstellen eines Gemisches aus Aluminiumnitridpulvern AIN und/oder Aluminium- und Zirkonoxynitriden AlₓO_{y}N_{z}, das reaktive Sintern dieses Gemisches bei einer Temperatur zwischen 1500°C und 1600°C und das schnelle Abkühlen der gesinterten Körner zwischen 1100°C und der Raumtemperatur.

16. Verfahren nach einem der Ansprüche 10 bis 15, **dadurch gekennzeichnet, dass** es ein Endwaschen der Körner mit einer Lösung mit einem pH-Wert zwischen 2 und 7 umfasst.

17. Verwendung von Schleifkörnern nach einem der Ansprüche 1 bis 9 für die Herstellung von Schleifscheiben zum Schleifen von Metallen und Metalllegierungen oder für das Präzisionsschleifen.

18. Verwendung von Schleifkörnern nach einem der Ansprüche 1 bis 9 für die Herstellung von Schleifleinen und -papier zum Polieren.

19. Verwendung von Schleifkörnern nach einem der Ansprüche 1 bis 9 für das Spritzpolieren oder die Herstellung von Polierpaste.
